# EUROPEAN PATENT APPLICATION

(11) **EP 4 459 255 A1**
(43) Date of publication of application: **06.11.2024**
(21) Application number: 22915529.6
(22) Date of filing: 31.10.2022
(51) Int. Cl.: G01M 13/045, B23Q 17/00, F16C 33/76, G01H 3/14, G01H 17/00, G01M 99/00, G05B 23/02

(54) **FAILURE SIGN DETECTION SYSTEM FOR SLIDING MECHANISM PROTECTION MEMBER, FAILURE SIGN DETECTION METHOD FOR SLIDING MECHANISM PROTECTION MEMBER, AND FAILURE SIGN DETECTION PROGRAM FOR SLIDING MECHANISM PROTECTION MEMBER**

(30) Priority: 27.12.2021 JP 2021212466; 22.06.2022 JP 2022100365
(71) Applicant: DENSO CORPORATION, Kariya-city, Aichi-pref., 448-8661 (JP)
(72) Inventor: MAWATARI, Kazuaki, Kariya- city, Aichi-pref., 448-8661 (JP); NAMBO, Yoshito, Kariya- city, Aichi-pref., 448-8661 (JP); KAWAI, Tetsuto, Kariya- city, Aichi-pref., 448-8661 (JP); KOYAMA, Yuji, Kariya- city, Aichi-pref., 448-8661 (JP)
(74) Representative: Winter, Brandl - Partnerschaft mbB
(86) International application number: PCT/JP2022/040737
(87) International publication number: WO 2023/127296

(57) **Abstract**

A failure sign detection system (10) includes: a seal member (5) being arranged on a slider (3) of an LM guide (1) to cover a gap between the slider (3) and a rail (2). A microphone (11) is arranged along a moving path of the slider (3) and acquires an acoustic signal generated when the LM guide (1) operates. A PC (16) extracts a feature quantity, which is a level of characteristic frequency component appearing in the acquired acoustic signal. Based on the extracted feature quantity, a failure sign of the seal member (5) is detected.

## Description

### CROSS REFERENCE TO RELATED APPLICATION

The present application is based on Japanese Patent Applications No. 2021-212466 filed on December 27, 2021 and No. 2022-100365 filed on June 22, 2022. The entire disclosures of all of the above applications are incorporated herein by reference.

### TECHNICAL FIELD

The present disclosure relates to a system, method, and computer program for detecting a sign of failure of a sliding mechanism protection member.

### BACKGROUND ART

When equipment used in production facility becomes worn out or damaged due to deterioration over time, the facility may stop abnormally or due to failure, leading to a decrease in productivity. For example, a linear guide device such as the LM Guide (registered trademark) moves a slider linearly along a track rail by interposing a ball between the track rail, which is a fixed part, and the slider, which is a movable part. In such a device, if foreign matter enters a gap between the track rail and the slider from an outside, mechanical parts such as the rail and balls will wear out, resulting in a shortened lifespan. Therefore, conventionally, techniques have been proposed for detecting an occurrence of wear in the mechanical parts and techniques for predicting the lifespan after a point where the wear occurs.

### PRIOR ART LITERATURE

### PATENT LITERATURE

PATENT LITERATURE 1: JP2009-287625A

### SUMMARY OF INVENTION

Further, in linear guide devices as described above, a seal member is provided to close the gap between the track rail and the slider in order to prevent foreign matter from entering the gap. Since this seal member is fixed to a slider side, it is inevitable that the seal member itself will be subject to wear and damage due to sliding of the slider. However, no technique has been proposed to date for detecting wear and damage occurring on the seal member itself.

It is an object of the present disclosure, in view of the above circumstances, to provide a system, method, and computer program for detecting sign of failure of a protection member used in a sliding mechanism.

According to a failure sign detection system for a sliding mechanism protection member of claim 1, the sliding mechanism protection member is arranged in a moving part of a moving device to cover a gap between the moving part and a fixed part. An acoustic signal acquisition unit is disposed along a path along which the moving part moves, and acquires an acoustic signal generated when the moving device operates. A feature quantity extraction unit extracts a feature quantity that is a level of a characteristic frequency component appearing in frequency components of the acquired acoustic signal. Then, a sign of failure of the sliding mechanism protection member is detected based on the extracted feature quantity.

That is, when the moving device operates, the sliding mechanism protection member moves together with the moving part, thereby generating sound at a part that is in contact with the fixed part. The frequency component of the sound changes as a shape of the sliding mechanism protection member changes over time. Therefore, when the feature quantity is extracted from the frequency components of the acquired acoustic signals, even in a noisy environment where the moving device is operating, it is possible to detect that the sliding mechanism protection member has deteriorated to some extent, due to progress of the change of the shape thereof. Thereby, it is possible to detect a sign that the protection member will reach a failure state.

According to the failure sign detection system of a sliding mechanism protection member of claim 4, since the feature quantity extraction unit analyzes the frequency component of the acoustic signal by using a frequency analysis unit, the feature quantity extraction unit can detect a sign that the protection member will reach a failure state, based on the feature quantity appearing in the analyzed frequency component.

### BRIEF DESCRIPTION OF THE DRAWINGS

The above and other objects, features and advantages of the present disclosure will become more apparent from the following detailed description made with reference to the accompanying drawings. In the drawings:
FIG. 1 is a functional block diagram showing a configuration of a failure sign detection system, which is a first embodiment;
FIG. 2 is a flowchart showing an overview of processing;
FIG. 3 is a diagram showing a model overview of the processing;
FIG. 4 is a diagram showing a model of an example of a facility using an LM guide;
FIG. 5 is a diagram showing an example of a speed pattern for operating a slider;
FIG. 6 is a diagram showing a spectrogram when a seal member is new;
FIG. 7 is a diagram showing a spectrogram when the seal material is worn out;
FIG. 8 is a diagram showing a spectrogram when the LM guide fails;
FIG. 9 is a plan view of the LM guide;
FIG. 10 is a side view of the LM guide;
FIG. 11 is a front view of the seal member attached to a holding member;
FIG. 12 is a diagram illustrating a case where failure sign detection is performed by statistical processing in a second embodiment;
FIG. 13 is a diagram illustrating a case where failure sign detection is performed by machine learning (Part 1) in a third embodiment;
FIG. 14 is a diagram illustrating the case where failure sign detection is performed by machine learning (Part 2);
FIG. 15 is a diagram illustrating the case where failure sign detection is performed by machine learning (Part 3);
FIG. 16 is a diagram illustrating the case where failure sign detection is performed by machine learning (Part 4);
FIG. 17 is a diagram illustrating the case where failure sign detection is performed by machine learning (Part 5);
FIG. 18 is a functional block diagram showing a configuration of a failure sign detection system in a fourth embodiment;
FIG. 19 is a functional block diagram showing an on-premises configuration case based on the configuration shown in FIG. 18;
FIG. 20 is a functional block diagram showing a cloud service configuration case using a cloud service based on the configuration shown in FIG. 18;
FIG. 21 is a functional block diagram showing an edge computing configuration case using edge computing based on the configuration shown in FIG. 18;
FIG. 22 is a diagram (Part 1) showing a variation of a form of notifying a processing result to an operator in a fifth embodiment;
FIG. 23 is a diagram (Part 2) showing another variation of a form of notifying a processing result to the operator;
FIG. 24 is a diagram showing a variation in a manner in which microphones are arranged in a sixth embodiment;
FIG. 25 is a diagram (Part 1) illustrating an example of response when a sign of failure is detected in a seventh embodiment;
FIG. 26 is a diagram (Part 2) illustrating an example of response when a sign of failure is detected;
FIG. 27 is a diagram (Part 3) illustrating an example of response when a sign of failure is detected; and
FIG. 28 is a diagram (Part 4) illustrating an example of response when a sign of failure is detected.

### DESCRIPTION OF EMBODIMENTS

### (First Embodiment)

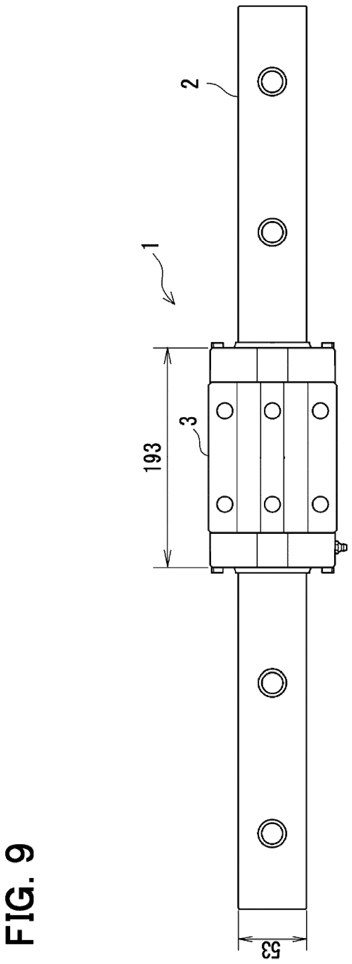

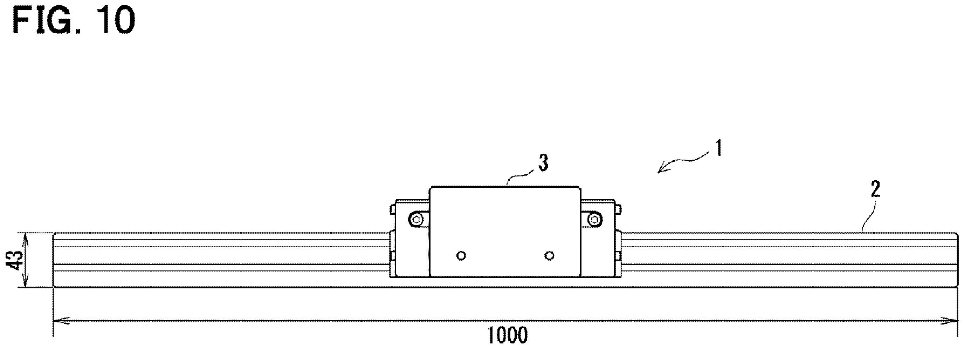

Hereinafter, a first embodiment will be described. As shown in FIGS. 9 and 10, an LM guide 1, which is an example of a moving device or a linear guide device, has a configuration in which a slider 3, which is a moving part, is moved along a linear rail 2 in a left-right direction as shown in the figure while being slid by a bearing or the like, which is a sliding mechanism (not shown). The length of the rail 2 is 1000 mm, the width thereof is 53 mm, and the height thereof is 43 mm. The length of the slider 3 is 193 mm.

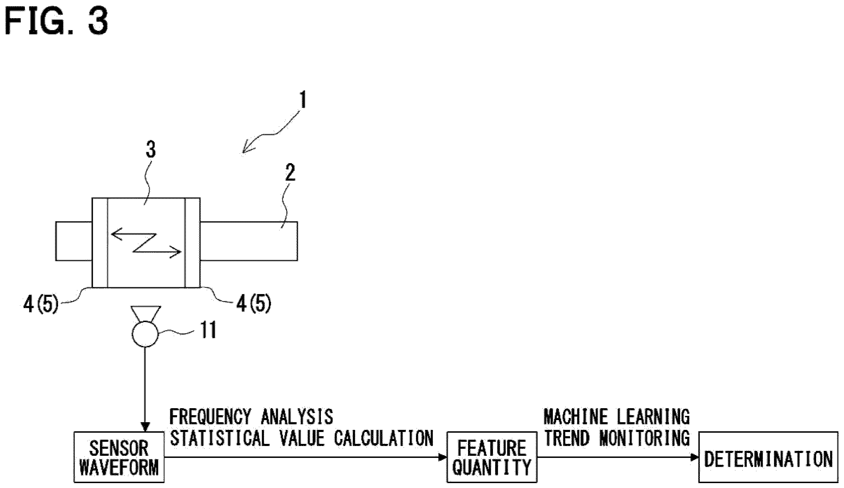

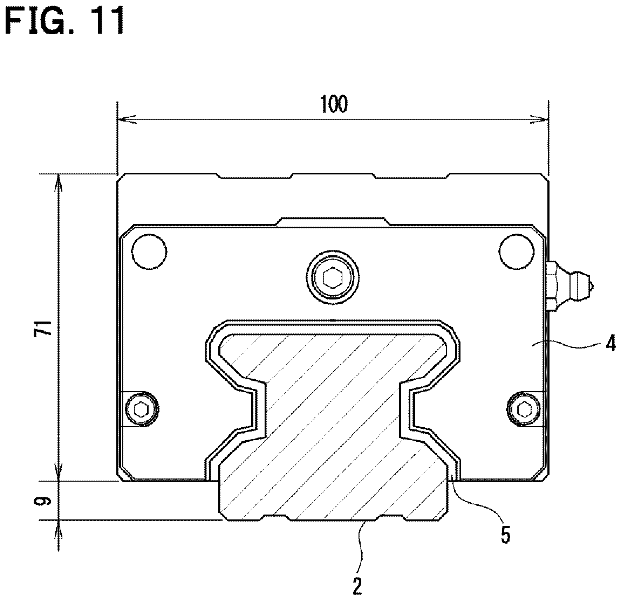

As shown in FIG. 3, seal members 5 attached to a holding member 4 are arranged on both of left and right end surfaces of the slider 3, as shown in FIG. 3. As shown in FIG. 11, a cross-sectional shape of the rail 2 is narrow at the center, and the seal member 5, which is a protection member, has a shape that follows an outer shape of the cross-sectional shape. The material of the seal member 5 is, for example, nitrile rubber, and its thickness is, for example, about 5 mm. The holding member4 has dimensions of 71 mm in length and 100 mm in width, and is arranged above a 9 mm height portion of the rail 2. The holding member 4 is fixed to both of the end surfaces of the slider 3 by screws. This seal member 5 prevents foreign matter from entering bearings or the like positioned between the rail 2 and the slider 3.

As shown in FIG. 3, a microphone 11 is arranged near the LM guide 1 along a moving path of the slider 3, and an acoustic signal generated by sliding the seal member 5 on the rail 2 as the slider 3 moves when the LM guide 1 operates is acquired. By examining a feature quantity of frequency components of the acoustic signal, a deterioration state of the seal member 5 is determined. The feature quantity is a level of a characteristic frequency component that appears in the frequency components of the acoustic signal. The microphone 11 is an example of an acoustic signal acquisition unit.

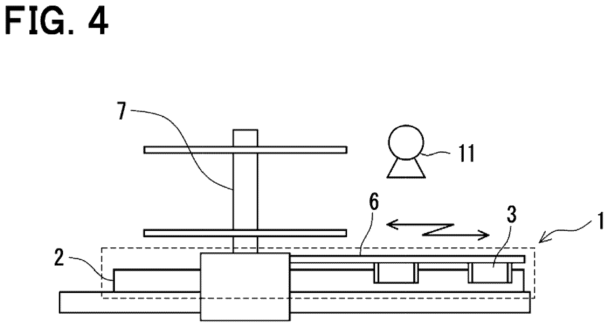

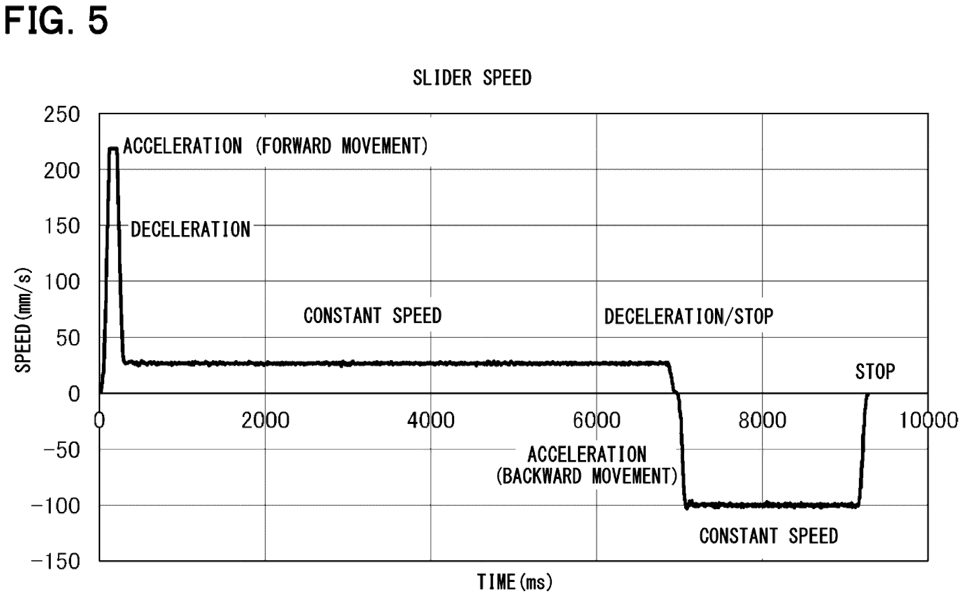

As shown in an example in FIG. 4, two sliders 3 are used to move a cutter 7 attached via a support member 6 in the left-right direction in the figure. Note that the left direction in the figure is a "front." As shown in FIG. 5, the slider 3 is steeply accelerated from its initial position, moved forward, and then steeply decelerated to move it at a constant speed. Then, when the slider 3 is decelerated and stopped, the slider 3 is steeply accelerated to move backward, and then steeply decelerated, the slider 3 is moved backward at a constant speed faster than when moving forward, and is stopped when returned to the initial position.

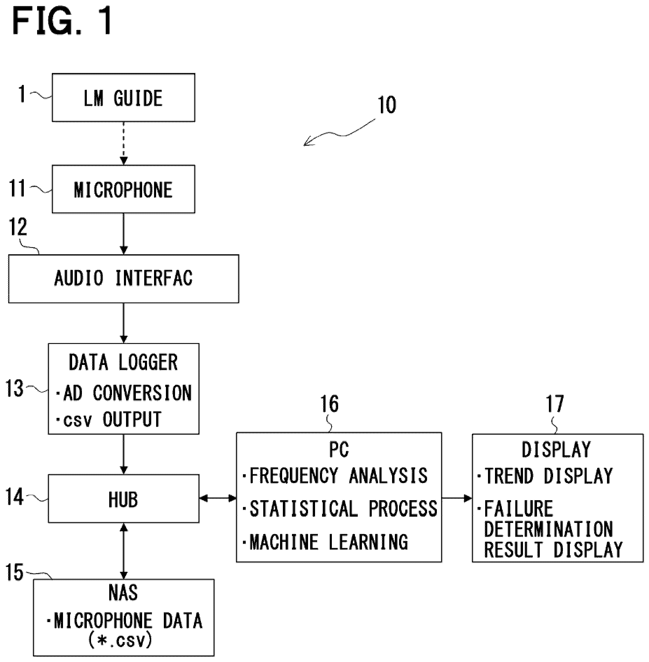

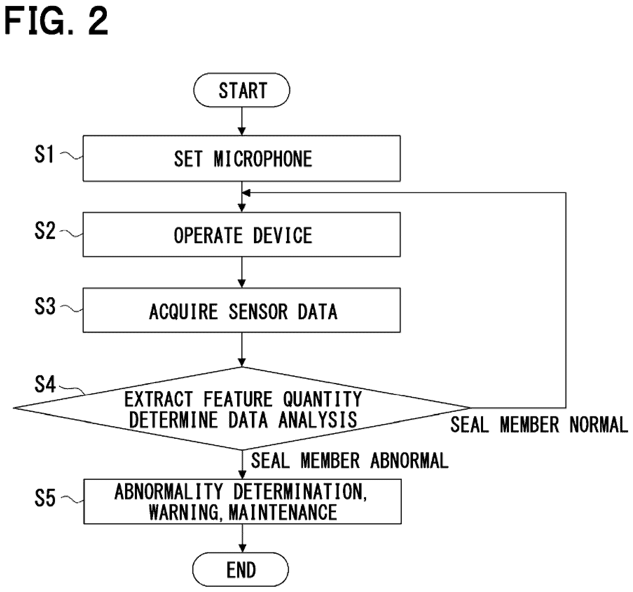

In a failure sign detection system 10 shown in FIG. 1, an acoustic signal acquired by the microphone 11 is input to a data logger 13 via an audio interface 12 (FIG. 2; S1 to S3). The audio signal is then A/D converted and output to a CSV (Comma Separated Value) file. The CSV file is stored in a NAS (Network Attached Storage) 15 via a HUB 14 for LAN communication.

Here, by using the audio interface 12 in addition to the microphone 11 as the acoustic signal acquisition unit, it is possible to adjust a gain and frequency of an amplifier built in the interface 12, and to reduce a load on subsequent processing. Further, when a sound pressure of the acoustic signal is low, a required sound pressure can be ensured by adjusting the gain of the amplifier. Further, as long as the sound pressure of the acoustic signal is at a sufficient level, the microphone 11 and a repeater may be directly connected. Note that a function of the above-mentioned repeater is to perform A/D conversion if the acoustic signal is an analog signal, and to relay the signal to a state detection unit.

Further, by using the NAS 15 as a data recording medium, the risk of data leakage to an outside of a company is minimized. Further, when using a cloud service instead of the NAS 15, accessing data from anywhere without worrying about storage capacity or the like. Note that, without using a data recording medium, edge processing is also performable. Note that illustrations related to the above will be shown in the fourth embodiment described later.

A personal computer; or a PC 16, (i) after accessing the NAS 15 via the HUB 14, and reading acoustic signal data stored in a CSV file; microphone data, (ii) by performing frequency analysis using FFT, statistical processing, machine learning, and the like, calculates the feature quantity of frequency components included in the microphone data. The PC 16 is an example of a feature quantity extraction unit.

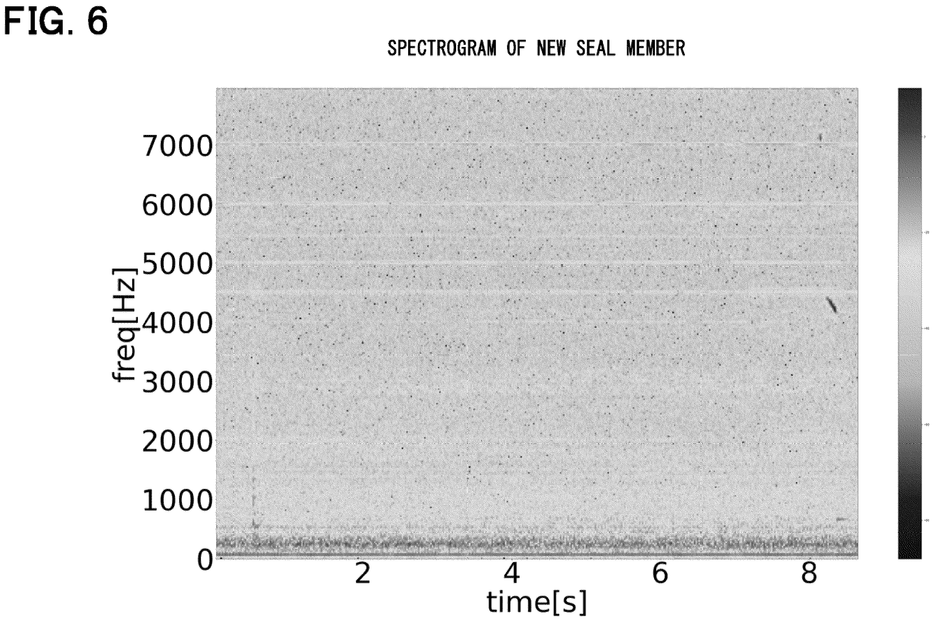

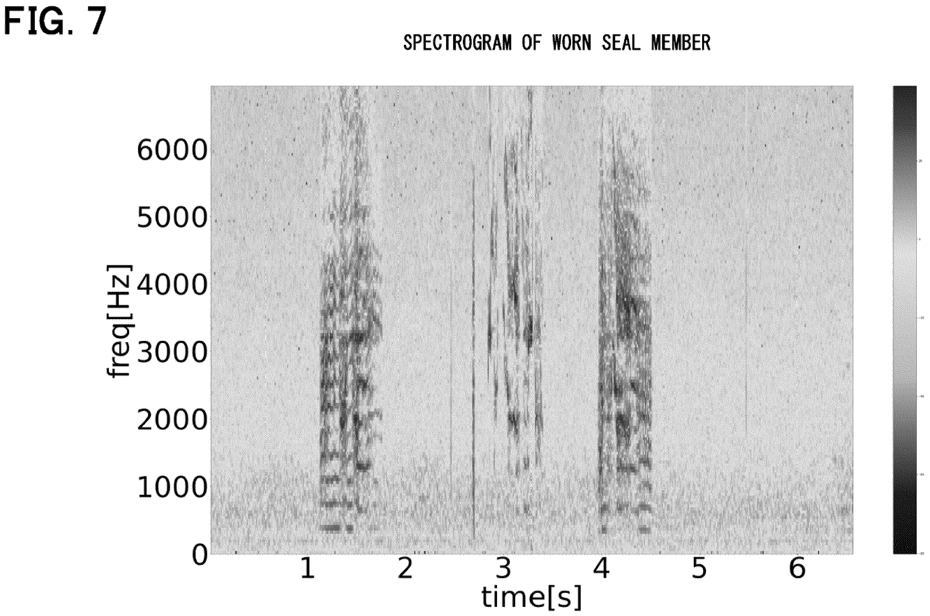

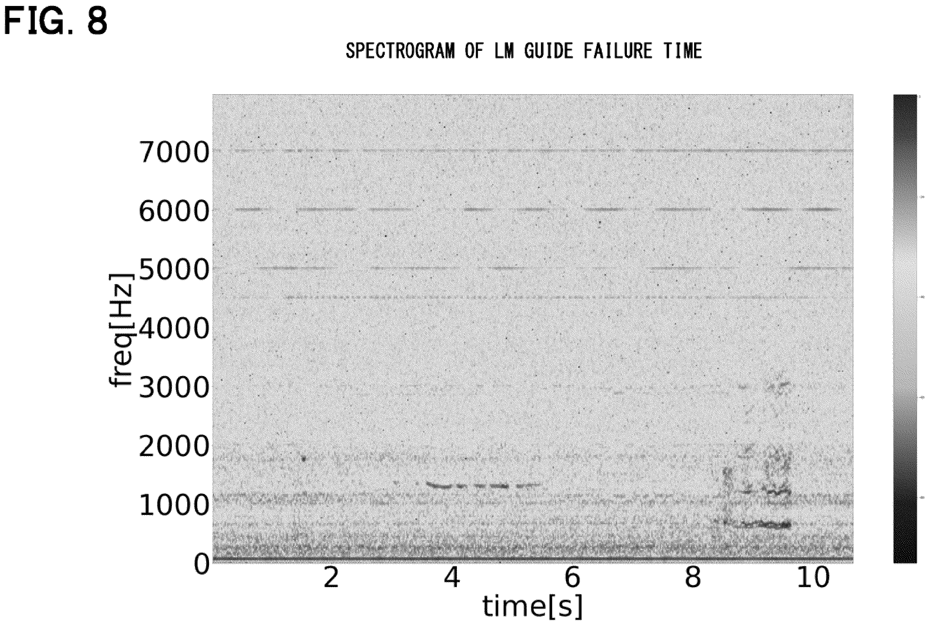

As shown in FIG. 6, when the seal member 5 is in a new state, nothing distinctive is observed in the spectrogram showing a result of frequency analysis. On the other hand, as shown in FIG. 7, when the seal member 5 is worn to some extent, it is observed that the sound pressure of frequency components around 500 Hz to 6000 Hz increases. When deterioration of the seal member 5 progresses and powder of the seal member 5 gets into a gap in between the rail 2 and the slider 3, the LM guide 1 will be in a failed state. The failed state refers to a state in which a contact portion between the rail 2 and the slider 3 is rubbed by the powder or the like interposed therebetween, causing scratches, and the dynamic and static accuracy of the LM guide 1 is deteriorated. In such case, as shown in FIG. 8, though the sound pressure of the frequency component is lower than in the case shown in FIG. 7, the same characteristics as FIG. 7 are exhibited.

The PC 16, by controlling a display 17, shows a trend regarding the above-described processing results, determines a deterioration state of the seal member 5 based on the feature quantity (S4), and displays the determination result. Further, the PC 16 causes the NAS 15 to store processing results and the like. When the determination result indicates that the seal member 5 has deteriorated, it is interpreted as a sign of a failure and an abnormality determination is made, a warning is displayed on the display 17, and a display prompting an operator to perform maintenance is performed (S5). Note that "the seal member 5 is in failure" refers to a state in which a progress of wear of the seal member 5 further than a current state causes the LM guide 1 to fail as shown in FIG. 8.

Here, by using the display 17 of the PC 16 as a notification unit or medium for notifying the operator, it is possible to immediately check various information such as (a) the contents processed by the PC 16, (b) a trend graph and the like. Further, if a lamp-type indicator is used as an example of a lighting display unit, it is possible to notify a staff at a far-away location, thereby needing no operator to be arranged near the display 17. Further, by providing a terminal connected to the Internet and by using e-mail, chat, etc., the determination results are sent to anywhere. Note that illustrations related to the above will be shown in the fifth embodiment described later.

According to the present embodiment described above, in the failure sign detection system 10, the seal member 5 is arranged on the slider 3 of the LM guide 1 so as to cover the gap between the slider 3 and the rail 2. The microphone 11 is arranged along the path along which the slider 3 moves, and acquires an acoustic signal generated when the LM guide 1 operates. The PC 16 extracts a feature quantity that is the level of a characteristic frequency component appearing in the frequency components of the acquired acoustic signal. Specifically, the frequency components of the acoustic signal are analyzed, and the feature quantities that appear in the frequency components are extracted. Then, a sign of failure of the seal member 5 is detected based on the extracted feature quantity.

That is, when the LM guide 1 operates, the frequency component of the sound generated at the portion where the seal member 5 is in contact with the rail 2 changes as the shape of the seal member 5 changes over time. Therefore, by extracting the feature quantity of the frequency component of the acquired acoustic signal, even in a noisy environment where the LM guide 1 is operating, it is possible to detect that the seal member 5 has deteriorated to some extent, due to progress of the change of the shape thereof. Thereby, it is possible to detect a sign that the seal member 5 will reach a failure state. It goes without saying that the system 10 can also detect a situation of when the seal member 5 has already failed.

Here, when the microphone 11 is installed outside the slider 3 and at a position where it does not come into contact with the rail 2, it can be installed without stopping the facility. Moreover, when it is installed outside the slider 3 and at a position on the rail 2 where it does not interfere with the operation of the slider 3, an SN ratio can be improved by getting closer to a source of the sound. Further, when it is installed inside the slider 3 or on a component above and including an object moving together with the slider 3 such as the holding member 4 or the like, the distance between the seal member 5 and the microphone 11 can be kept constant regardless of the movement of the slider 3, and an absolute value of the sound pressure of the acoustic signal can be compared.

Further, as a response after detecting a sign, by lubricating the rail 2, the seal member 5 is prevented from being worn out or deteriorated sooner. Further, by replacing only the seal member 5 with a new one, it is possible to prevent a large amount of foreign matter from entering the inside of the slider 3 and accelerating deterioration of the bearing. Further, when only the seal member 5 is replaced, if the feature quantity changes due to an abnormality in an attachment state of the seal member 5, such an attachment state is also detectable. Note that illustrations related to these will be shown in the sixth embodiment described later.

### (Second Embodiment)

Hereinafter, the identical parts as those in the first embodiment will be designated by the same reference numerals for simplification of the description, and only differences from the first embodiment will be described below. The second embodiment shows an example in which the determination is made by statistical processing in the PC 16. On the horizontal axis of the spectrograms shown in FIGS. 6 to 8, 0s to 6s is a forward movement period of the slider 3, and 6s to 10s is a backward movement period thereof. During the period in which the slider 3 moves backward, a total value and an average value of the intensities of frequency components are determined for the frequency band of 1000 Hz to 6000 Hz.

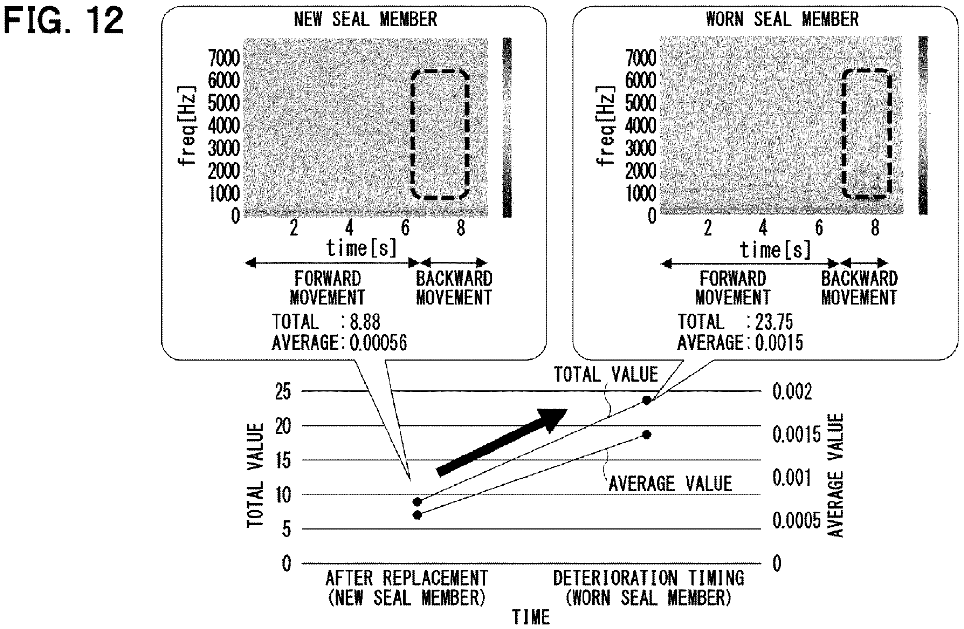

As shown in FIG. 12, the total value when the seal member 5 is new is "8.88" and the average value is "0.00056", whereas the total value when the seal member 5 is worn out and deteriorated is "23.75" and the average value is "0.0015", and both values are increasing. By monitoring the trend of such increase of numerical values and applying a threshold value, signs of a failure state are detected.

### (Third Embodiment)

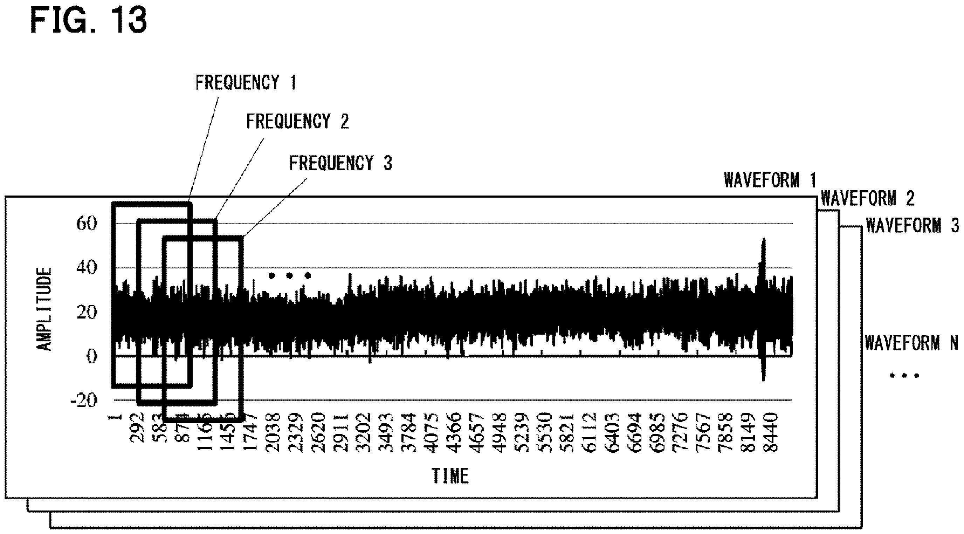

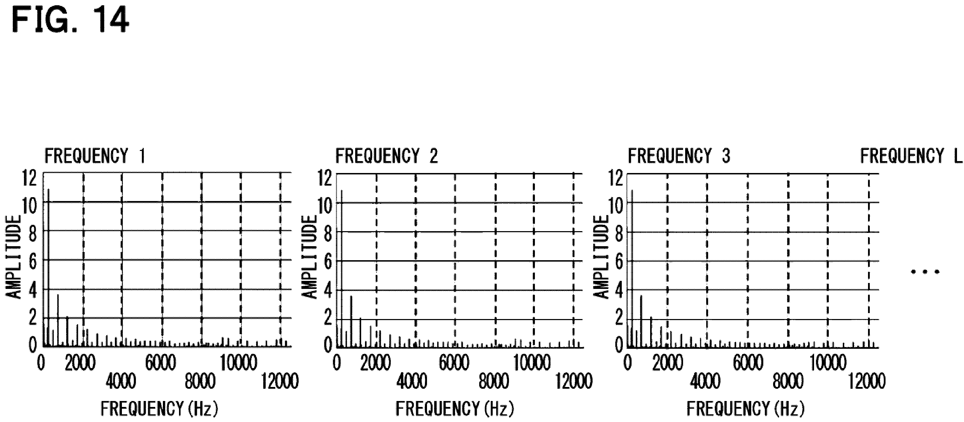

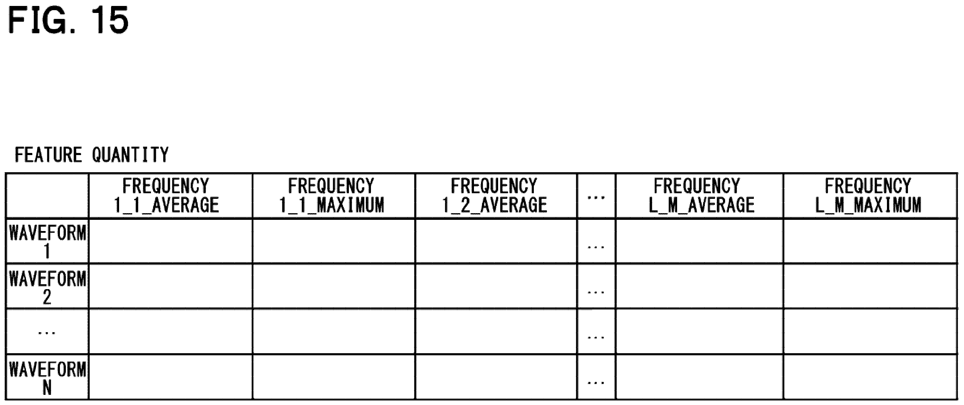

The third embodiment shows an example in which the determination is made by machine learning in the PC 16. An overview of processing is shown below.
(1) A plurality of acoustic signal waveforms when the seal member 5 is new, that is, in a normal state are prepared.
(2) Divide each waveform into time windows and analyze the frequency (see FIGS. 13 and 14).
(3) Divide the frequency distribution into certain sections and find the maximum value and average value of the signal level for each section.
(4) By repeating (2) and (3), the feature quantity for each waveform is extracted (see FIG. 15).
(5) For example, a model is created from the feature quantity of the normal state using a so-called Isolation Forest, which is an unsupervised learning outlier detection method.
(6) Compare the data of the normal state and the worn state, and determine by quantifying a degree of change from the normal state.

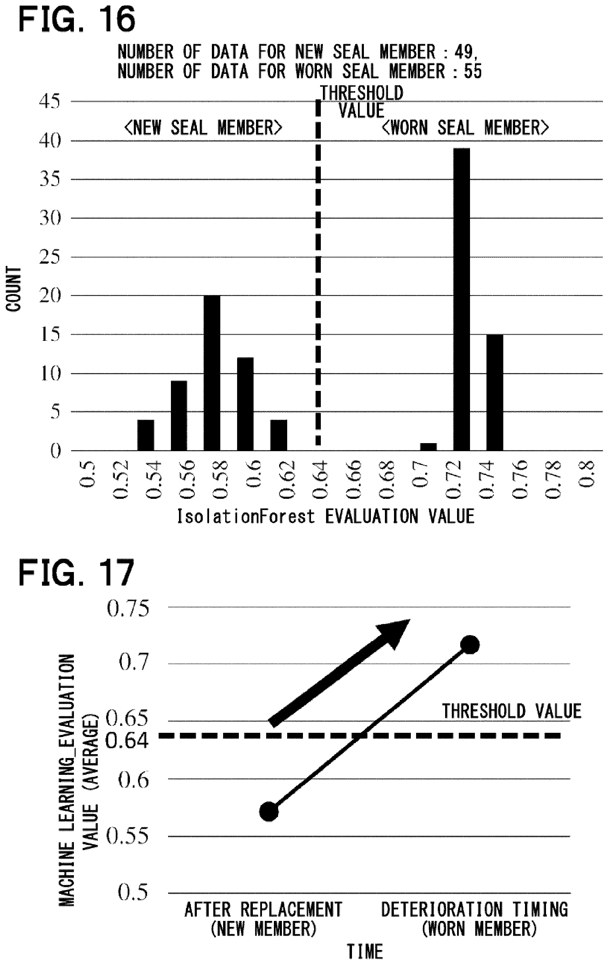

As shown in FIG. 16, it is assumed that a histogram of evaluation values of the Isolation Forest has appeared. The number of pieces of data for new member is 49, and the number of pieces of data for worn member is 55. In such case, when a threshold value of the evaluation value is set to, for example, 0.64, deterioration can be determined in actual operation, by monitoring the trend of the average value of the evaluation values as shown in FIG. 17.

### (Fourth Embodiment)

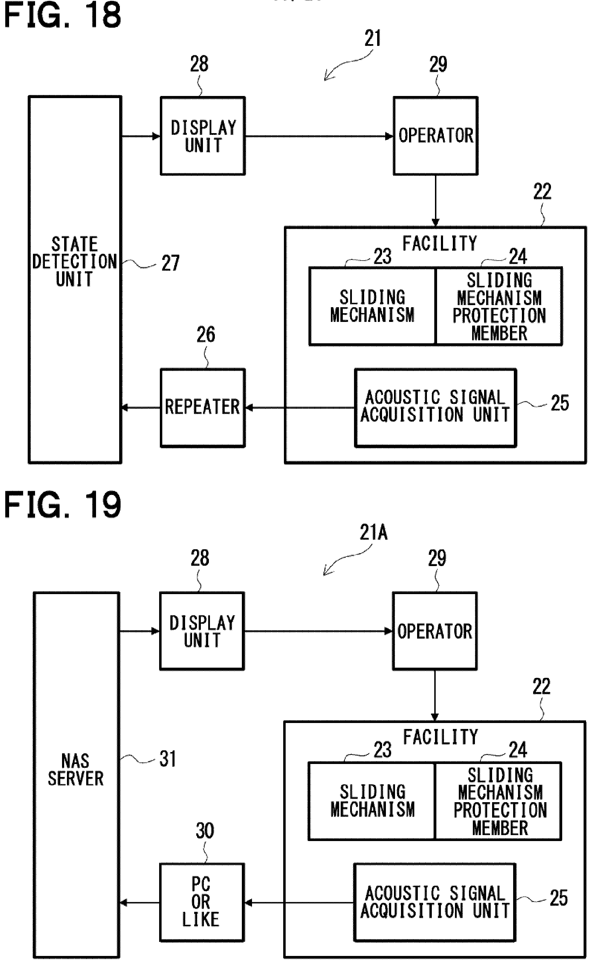

The fourth embodiment illustrates a variation of the configuration of the system 10 shown in FIG. 1 described above. FIG. 18 is a slightly higher-level conceptualization of the functional block diagram shown in FIG. 1. In the system 21, a facility 22 includes the LM guide 1 and the like, and includes a sliding mechanism 23, a sliding mechanism protection member 24, and an acoustic signal acquisition unit 25.

The acoustic signal acquired by the acoustic signal acquisition unit 25 is input to a state detection unit 27 via a repeater 26. The state detection unit 27 corresponds to a storage for storing acoustic data, like the data logger 13, and a device equipped with the frequency analysis and statistical processing functions of the PC 16. The processing result by the state detection unit 27 is displayed on a display device 28 corresponding to the display 17, for example, and presented to an operator 29.

FIGS. 19 to 21 show variations of the embodiment based on the configuration shown in FIG. 18. A system 21A shown in FIG. 19 shows a configuration realized on-premises, and parts corresponding to the repeater 26 and the state detection unit 27 are realized by a PC etc. 30 and a NAS server 31.

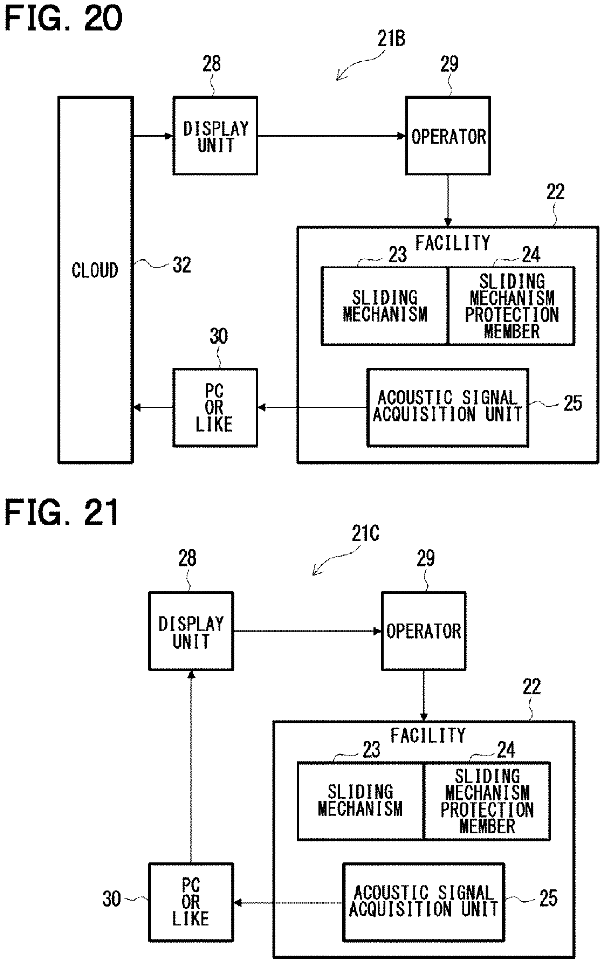

A system 21B shown in FIG. 20 shows a configuration realized by replacing the NAS server 31 shown in FIG. 19 with a cloud service 32. Further, a system 21C shown in FIG. 21 shows a configuration realized by edge computing by eliminating the NAS server 31 shown in FIG. 20. The system 21C performs processes such as frequency analysis and the like in real time without using storage such as the NAS server 31 and the like.

### (Fifth Embodiment)

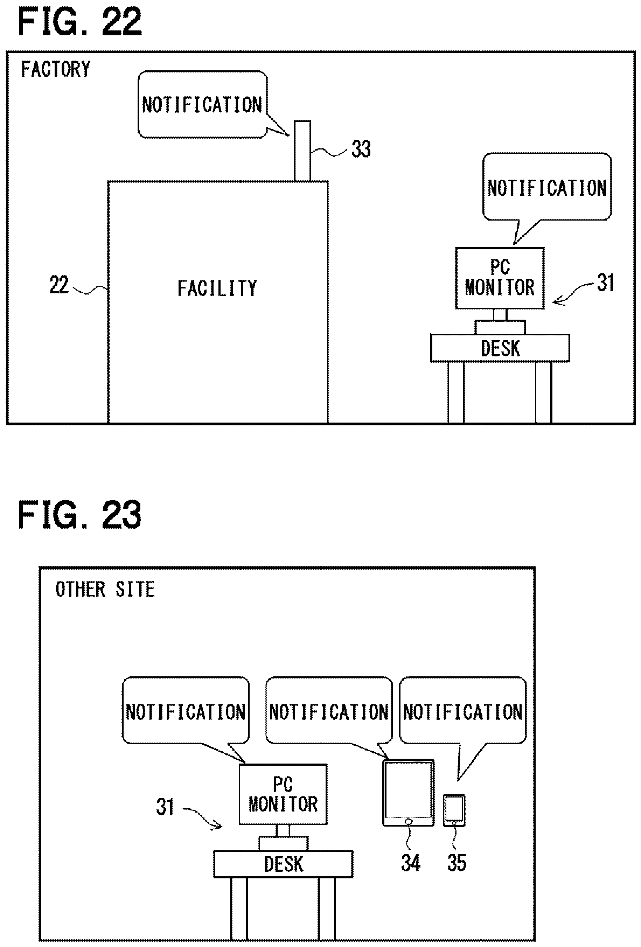

The fifth embodiment illustrates a variation of the form in which the above-described operator 29 is notified of the processing result. FIG. 22 shows a case in which a lamp 33 is provided for the facility 22 in a factory, and by a display lighting using the lamp 33, it is possible to notify the operator 29 positioned far away from the facility 22. Further, notification is also made on a display of the PC 31 arranged near the facility 22.

Further, FIG. 23 shows a case in which notification is made by the display on communication terminals such as the PC 31, a tablet 34, a smartphone 35 and the like, which are arranged at other sites other than the factory and connected via a communication network such as the Internet, for example, displaying messages, icons, or the like transmitted thereto as a mail, chat, or the like.

### (Sixth Embodiment)

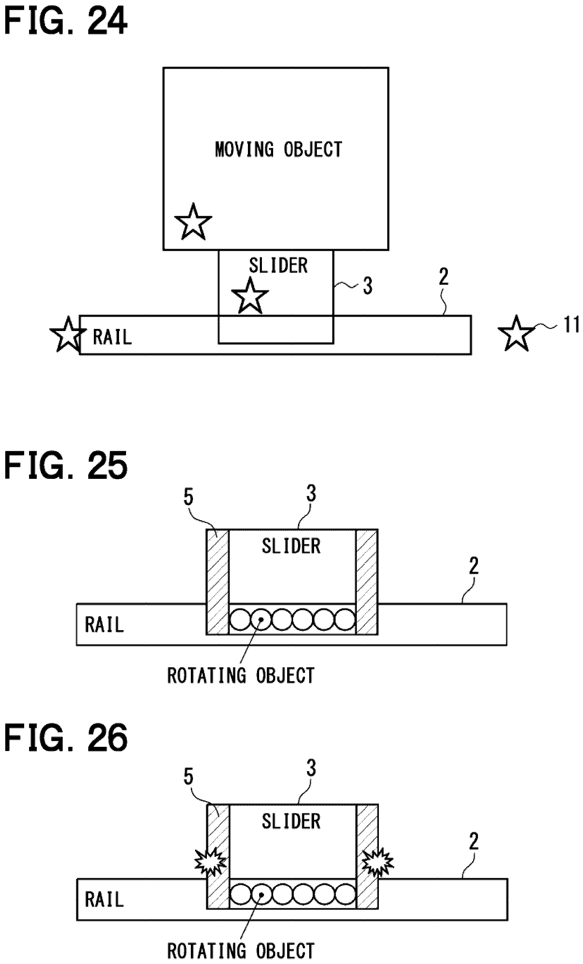

The sixth embodiment illustrates a variation of a manner in which the microphone 11 described above is arranged. A star-shaped symbol shown in FIG. 24 indicates the microphone 11, which is arranged near the rail 2, the slider 3, or a moving object mounted on the slider 3, such as a pointing member 6 or the cutter 7.

### (Seventh Embodiment)

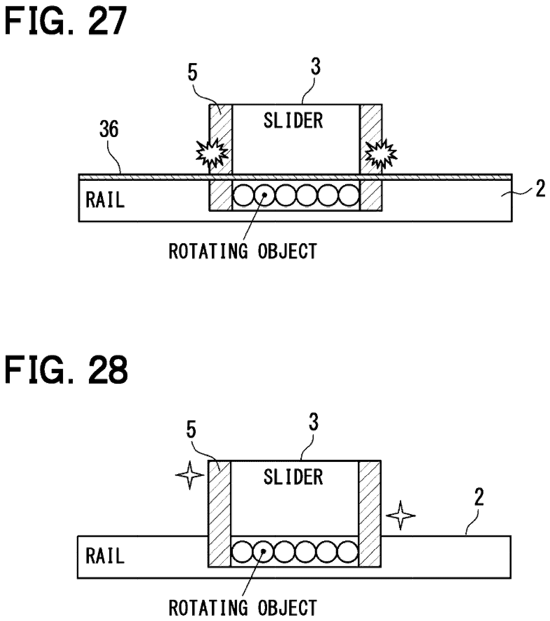

The seventh embodiment illustrates an example of how to respond when the above-mentioned failure sign is detected. Note that a "rotating object" shown in the drawing is a bearing or the like that constitute the sliding mechanism. FIG. 25 shows that the seal member 5 is in a healthy state, and FIG. 26 shows that the seal member 5 in a worn state. FIG. 27 shows a case where progress of deterioration is suppressed by injecting a lubricant 36 such as oil or the like into a part of the sliding mechanism. FIG. 28 shows a state in which the seal member 5 has been replaced with a new one.

### (Other Embodiments)

It is not necessarily required to use the PC 16 or the like, and the operator may visually check the spectrogram displayed on the display 17 to make the determination. The characteristics that appear in the frequency components vary depending on the size and shape of the LM guide 1, the size, shape and material of the seal member 5, an operation pattern of the slider 3, and the like. The linear guide device is not limited to the LM guide 1. The data logger 13 to the PC 16 may be configured as a single device, and the processing may be performed by executing a single program by a computer configuring such a device.

Note that parameters that affect the waveform of the acoustic signal include, for example, the following.

### <Rail>

- Width, length, height, cross-sectional shape, material.

### <Slider>

- Width, length, height, cross-sectional shape, material.

### <Side surface seal member>

- Rail contact circumference shape or rail cross-sectional shape, rail contact circumference length, rail contact width, material.

### <LM guide control unit>

- Movement speed, speed pattern.

### <Sensor> ·Arrangement, distance to a seal member, sensor type, sensor specification.

### <Moving object>

- Weight, center of gravity position.

### <Environment>

-Amount of foreign matter, size of foreign matter, material of foreign matter, blow cycle, temperature, humidity, amount of lubricant, type of lubricant, lubrication cycle.

Even when the conditions and values of these parameters change, the sound intensity, frequency, noise intensity, frequency, and determination threshold value required for abnormality detection are appropriately modifiable or adjustable, by sensor signal processing using prior evaluation or classical statistical methods or machine learning during operation. Further, the quality of the protection member may also change depending on the mounting environmental conditions such as temperature, water absorption rate and the like, and may be affected by changes in altitude, or the like, for example. These environmental conditions are acquired by sensors, and are judged in a combined manner. The feature quantity of the acoustic signal changes not only by the configuration of the linear guide device or other moving device, but also by the shape of foreign matter, such as a spherical shape, an elliptic shape, or a concave/convex shape, and the physical properties of the material, such as hardness and viscosity. It is also possible to detect the characteristics of such different foreign objects.

The present disclosure includes, in addition to the invention according to claims, the followings.
[1] A failure sign detection system for a sliding mechanism protection member (5) in a moving device, the moving device including a fixed part (2) and a moving part (3), the moving part movable along the fixed part via a sliding mechanism, the failure sign detection system for detecting a failure sign of the sliding mechanism protection member (5) arranged to cover a gap between the moving part and the fixed part, the failure sign detection system comprising:
   an acoustic signal acquisition unit (11) arranged along a path along which the moving part is movable via the sliding mechanism and configured to acquire an acoustic signal generated when the moving device operates; and
   a feature quantity extraction unit (16) configured to extract a feature quantity that is a level of a characteristic frequency component appearing in frequency components of the acquired acoustic signal, wherein
   the failure sign detection system is configured to detect the failure sign of the sliding mechanism protection member based on the extracted feature quantity.
[2] The failure sign detection system according to [1], wherein
   the fixed part is a linear rail, and
   the moving part is movable linearly along the rail.
[3] The failure sign detection system according to [1] or [2], further comprising:
   a detection unit configured to detect the failure sign.
[4] The failure sign detection system according to any one of [1] to [3], wherein
   the feature quantity extraction unit includes a frequency analysis unit configured to analyze the frequency components.
[5] The failure sign detection system according to any one of [1] to [4], wherein
   the feature quantity extraction unit is configured on-premises.
[6] The failure sign detection system according to any one of [1] to [4], wherein
   the feature quantity extraction unit is configured using a cloud service.
[7] The failure sign detection system according to any one of [1] to [4], wherein
   the feature quantity extraction unit is configured by edge computing.
[8] The failure sign detection system according to any one of [1] to [7], further comprising:
   a notification unit configured to notify an operator of the detected sign.
[9] The failure sign detection system according to [8], wherein
   the notification unit is a display of a personal computer configured to indicate a notification on the display.
[10] The failure sign detection system according to [8], wherein
   the notification unit is a lighting display unit configured to indicate a notification by lighting on the lighting display unit.
[11] The failure sign detection system according to [8], wherein
   the notification unit is a communication terminal connectable via a communication network, and
   the failure sign detection system is configured to transmit a message or an icon to the communication terminal for notification.
[12] The failure sign detection system according to any one of [1] to [11], wherein
   the acoustic signal acquisition unit is arranged near the fixed part.
[13] The failure sign detection system according to any one of [1] to [11], wherein
   the acoustic signal acquisition unit is arranged near the moving part.
[14] The failure sign detection system according to any one of [1] to [11], wherein
   the acoustic signal acquisition unit is arranged near a moving object mounted on the moving part.

Although the present disclosure is described based on the above embodiments, the present disclosure is not limited to the embodiments and the structure described above. The present disclosure incorporates various modifications and variations within the scope of equivalents. In addition, various combinations and modes, and other combinations and modes including only one element, more than or less than one element added thereto are also within the scope and idea of the present disclosure.

Means and/or functions provided by each device or the like may be provided by software recorded in a substantive memory device and a computer that can execute the software, software only, hardware only, or combination thereof. For example, when a control apparatus is provided by an electronic circuit that is hardware, it can be provided by a digital circuit including a large number of logic circuits, or by an analog circuit.

A control unit and a method thereof described in the present disclosure may also be provided by a dedicated computer, which is provided by configuring a processor and a memory programmed to perform one or more functions realized by a computer program. Alternatively, the control unit and the method thereof described in the present disclosure may be realized by a dedicated computer provided by configuring a processor with one or more dedicated hardware logic circuits. Alternatively, the control unit and the method thereof described in the present disclosure may be realized by one or more dedicated computers configured as a combination of (a) a processor and a memory programmed to perform one or more functions and (b) a processor configured by one or more hardware logic circuits. Further, the computer program may be stored in a non-transitory, tangible computer-readable recording medium as an instruction to be executed by a computer.

## Claims

1. A failure sign detection system for a sliding mechanism protection member (5) in a moving device, the moving device including a fixed part (2) and a moving part (3), the moving part movable along the fixed part via a sliding mechanism, the failure sign detection system for detecting a failure sign of the sliding mechanism protection member (5) arranged to cover a gap between the moving part and the fixed part, the failure sign detection system comprising:
an acoustic signal acquisition unit (11) arranged along a path along which the moving part is movable via the sliding mechanism and configured to acquire an acoustic signal generated when the moving device operates; and
a feature quantity extraction unit (16) configured to extract a feature quantity that is a level of a characteristic frequency component appearing in frequency components of the acquired acoustic signal, wherein
the failure sign detection system is configured to detect the failure sign of the sliding mechanism protection member based on the extracted feature quantity.

2. The failure sign detection system according to claim 1, wherein
the fixed part is a linear rail, and
the moving part is movable linearly along the rail.

3. The failure sign detection system according to claim 1 or 2, further comprising:
a detection unit configured to detect the failure sign.

4. The failure sign detection system according to claim 1 or 2, wherein
the feature quantity extraction unit includes a frequency analysis unit configured to analyze the frequency components.

5. The failure sign detection system according to claim 1 or 2, wherein the feature quantity extraction unit is configured on-premises.

6. The failure sign detection system according to claim 1 or 2, wherein the feature quantity extraction unit is configured using a cloud service.

7. The failure sign detection system according to claim 1 or 2, wherein the feature quantity extraction unit is configured by edge computing.

8. The failure sign detection system according to claim 1 or 2, further comprising:
a notification unit configured to notify an operator of the detected sign.

9. The failure sign detection system according to claim 8, wherein
the notification unit is a display of a personal computer configured to indicate a notification on the display.

10. The failure sign detection system according to claim 8, wherein
the notification unit is a lighting display unit configured to indicate a notification by lighting on the lighting display unit.

11. The failure sign detection system according to claim 8, wherein
the notification unit is a communication terminal connectable via a communication network, and
the failure sign detection system is configured to transmit a message or an icon to the communication terminal for notification.

12. The failure sign detection system according to claim 1 or 2, wherein the acoustic signal acquisition unit is arranged near the fixed part.

13. The failure sign detection system according to claim 1 or 2, wherein the acoustic signal acquisition unit is arranged near the moving part.

14. The failure sign detection system according to claim 1 or 2, wherein
the acoustic signal acquisition unit is arranged near a moving object mounted on the moving part.

15. A failure sign detection method for a sliding mechanism protection member in a moving device, the moving device including a fixed part and a moving part, the moving part arranged on the fixed part via a sliding mechanism and movable along the fixed part, the sliding mechanism protection member arranged on the moving part to cover a gap between the moving part and the fixed part, the failure sign detection method comprising:
acquiring arranged along a path along which the moving part is movable, an acoustic signal generated when the moving device operates;
extracting a feature quantity that is a level of a characteristic frequency component that appears in frequency components of the acquired acoustic signal; and
detecting a failure sign of the sliding mechanism protection member based on the extracted feature quantity.

16. The failure sign detection method for a sliding mechanism protection member according to claim 15, wherein
the fixed part is a linear rail, and
the moving part is movable linearly along the rail.

17. The failure sign detection method for a sliding mechanism protection member according to claim 15 or 16, wherein
the feature quantity is extracted by analyzing the frequency component.

18. A failure sign detection program for a sliding mechanism protection member in a moving device, the moving device including a fixed part and a moving part, the moving part arranged on the fixed part via a sliding mechanism and movable along the fixed part, the sliding mechanism protection member arranged on the moving part to cover a gap between the moving part and the fixed part, the failure sign detection program to be executed by a computer of a device, which is configured to detect a failure sign, the failure sign detection program comprising:
acquiring arranged along a path along which the moving part is movable, an acoustic signal generated when the moving device operates;
extracting a feature quantity that is a level of a characteristic frequency component that appears in frequency components of the acquired acoustic signal; and
detecting the failure sign of the sliding mechanism protection member based on the extracted feature quantity.

19. The failure sign detection program for a sliding mechanism protection member according to claim 18, wherein
the fixed part is a linear rail, and
the moving part is movable linearly along the rail.

20. The failure sign detection program for a sliding mechanism protection member according to claim 18 or 19, wherein
the feature quantity is extracted by analyzing the frequency component.
